# EUROPEAN PATENT SPECIFICATION

(11) **EP 4 456 294 B1**
(45) Date of publication and mention of the grant of the patent: **07.10.2026**
(21) Application number: 22954394.7
(22) Date of filing: 10.08.2022
(51) Int. Cl.: H01M 50/209, H01M 50/249, H01M 50/258, H01M 10/0525, H01M 10/625, H01M 10/647, H01M 10/613, H01M 10/6556, H01M 50/204, H01M 50/244, H01M 50/271, H01M 50/289, H01M 50/50, H01M 50/503, H01M 50/507, H01M 50/502, H01M 50/509

(54) **BATTERY, ELECTRIC DEVICE, AND FORMING METHOD FOR BATTERY**
BATTERIE, ELEKTRISCHE VORRICHTUNG UND HERSTELLUNGSVERFAHREN FÜR DIE BATTERIE
BATTERIE, DISPOSITIF ÉLECTRIQUE ET PROCÉDÉ DE FABRICATION DE BATTERIE

(43) Date of publication of application: 30.10.2024
(73) Proprietor: Contemporary Amperex Technology Co., Limited, Ningde, Fujian 352100 (CN)
(72) Inventor: LONG, Chao, Ningde, Fujian 352100 (CN); ZHANG, Wenhui, Ningde, Fujian 352100 (CN); CHEN, Xingdi, Ningde, Fujian 352100 (CN); WANG, Peng, Ningde, Fujian 352100 (CN)
(74) Representative: Ran, Handong
(86) International application number: PCT/CN2022/111365
(87) International publication number: WO 2024/031418

(56) References cited:
- EP-A1- 3 780 153
- WO-A1-2022/111199
- CN-U- 208 819 967
- CN-U- 214 589 171
- CN-U- 214 898 747
- CN-U- 214 898 747
- CN-U- 216 872 113
- CN-U- 216 872 114
- CN-U- 216 872 114
- US-A1- 2020 083 515

## Description

### Technical Field

The present application relates to the technical field of batteries, and more particularly to a battery, an electrical apparatus and a battery forming method.

### Background

With energy saving and emission reduction being the key to the sustainable development of automobile industry, electric vehicles have become an important part of the sustainable development of automotive industry due to their advantages of energy saving and environmental protection. For electric vehicles, battery technology is an important factor related to their development.

In the existing battery manufacturing process, the output member connected to the main output terminal of the battery group is usually arranged across the entire battery, which causes problems of increased weight and cost.

US 2020/083515 A1 discloses a battery pack wherein each battery is mechanically and electrically connected by a magnetic device to a busbar. In case of failure of any accumulator, it is disconnected completely passively because its failure generates an inactivation of the magnetic device. The disconnection causes the gravity drop of the accumulator and the possibly completely passive implementation of an accumulator shunt. US 2020/083515 A1 discloses the preamble of claim 1. EP 3780153 A1 discloses a battery module including a first battery sequence, a second battery sequence, a first output electrode component, a second output electrode component, and a busbar assembly. The first battery sequence includes a plurality of first batteries arranged along a longitudinal direction, the second battery sequence includes a plurality of second batteries arranged in the longitudinal direction, and the first battery sequence and the second battery sequence are laid out along a transverse direction. The first batteries include a first electrode terminal, and the second batteries include a second electrode terminal. The busbar assembly includes a first busbar component, a second busbar component, and a third busbar component. The first busbar component is connected to the first electrode terminal, the second busbar component is connected to the second electrode terminal, and the third busbar component connects the first electrode terminal and the second electrode terminal. The first output electrode component is connected to the first electrode terminal. The second output electrode component is connected to the second electrode terminal. The first battery connected to the first output electrode component and the second battery connected to the second output electrode component are located at the same end of the battery module.

### Summary of the Invention

The present application provides a battery, an electrical apparatus and a battery forming method. The battery can avoid arranging an output member across the entire battery, thereby reducing the weight and cost.

The invention is set out in the appended set of claims.

According to the present invention there is provided a battery, comprising: a box; comprising a top cover, a bottom cover and an accommodating frame, the bottom cover and the top cover are arranged opposite to each other at two ends of the accommodating frame in a height direction of the box. battery groups arranged in the box, wherein the number of the battery groups is two or more and they are arranged along a first direction, each of the battery groups comprises an even number of battery cells arranged in a second direction perpendicular to the first direction, the battery cell comprises a first side wall and a second side wall connected to each other, the first side wall is the wall with the largest area among all the outer walls of the battery cell, the first direction is perpendicular to the first side wall, and the second side walls of two adjacent battery cells are arranged opposite to each other along the second direction; a busbar used to electrically connect two adjacent battery cells; and two output members arranged on the same side of the first direction; wherein the outermost battery group along the first direction is provided with two output terminals distributed along the second direction, and the two output members are electrically connected respectively to the two output terminals to form a power supply path together with the busbar, further comprising a position-limiting member fixedly connected inside the box and abutting against the first side wall of the battery cell to limit the deformation of the battery cell in the first direction, the position-limiting member being connected to the accommodating frame and at least one of the top cover and the bottom cover, and the battery further comprises an output member base provided on the position-limiting member to support the output member.

In the present invention, the two output members and the two output terminals of the battery face the same side, which can simplify the connection structure, improve the space utilization inside the box, facilitate processing and assembly, while avoiding use of a long output member across the battery group to form a power supply path, reducing the weight and cost, and improving the integration and energy density of the battery.

In the embodiments of the present application, the busbar includes a plurality of first busbars and a plurality of second busbars. The first busbars are used to electrically connect two adjacent battery cells along the first direction, and the second busbars are used to electrically connect two adjacent battery cells along the second direction.

Through arrangement in this way, the busbars can be assembled regularly, improving the assembly efficiency, and ensuring the effectiveness of forming two output terminals on the outermost battery group in the first direction, thereby ensuring that the two output members are arranged on the same side of the first direction, so as to improve the space utilization inside the box, reduce the weight and cost, and improve the integration and energy density of the battery.

In some embodiments, the second busbar is used to electrically connect two adjacent battery cells in the outermost battery group along the first direction.

Through arrangement in this way, two output terminals can be formed for the outermost battery group along the first direction, thereby ensuring the effectiveness of arrangement of the two output members on the same side of the first direction.

In some embodiments, the two output terminals are respectively arranged on the two battery cells located at the ends in the second direction in the outermost battery group, which reduces the arrangement length of the two output members, thereby reducing the weight and cost and improving the integration and energy density of the battery.

The battery further includes a position-limiting member fixedly connected inside the box and abutting against the first side wall of the battery cell. The position-limiting member is used to limit the deformation of the battery cell in the first direction.

In the embodiments of the present application, the position-limiting member can provide positioning for the battery cell, which is beneficial to the installation efficiency and installation accuracy, thereby ensuring desirable quality of the battery. Moreover, the position-limiting member can limit the deformation of the battery cell in the first direction, which can buffer the expansion of the battery cell and ensure the safety performance of the battery.

The battery cell further includes an output member base arranged on the position-limiting member to support the output member.

Through arrangement in this way, the output member and the output member base form an output interface for connection with external electrical apparatus, which facilitates the installation and fixation of the output member, avoids contact short circuits, and ensures the safety performance of the battery.

In some embodiments, the position-limiting member extends along the second direction and is connected to the box at both ends in the second direction, which can improve the overall structural strength of the box, improve the ability to resist expansion of the battery cells, and ensure safety performance.

In some embodiments, the position-limiting member abuts against the first side wall of the battery cell in the outermost battery group, which can provide positioning for the battery group, which is beneficial to installation efficiency and installation accuracy, thereby ensuring desirable quality of the battery.

In some embodiments, a plurality of cavities penetrating along the second direction are provided in the position-limiting member.

Through arrangement in this way, the space inside the cavities can be compressed in the first direction so that the position-limiting member can limit the deformation of the battery cell and buffer and absorb the expansion force of the battery cell, thereby ensuring the safety performance of the battery cell. In addition, the provision of the cavities can also reduce the weight of the position-limiting member, reduce the costs, and achieve a lightweight design, while improving the overall energy density of the battery.

In some embodiments, a partition is provided between two adjacent battery groups along the first direction and abuts against the first side wall of each battery cell in the two adjacent battery groups.

Through arrangement in this way, the partition can serve as a structural member of the box. By sandwiching the partition between two adjacent battery groups and connecting it to the first side wall of each battery cell, the partition can better achieve at least one of the functions of improving structural strength and resisting expansion force.

In some embodiments, the partition is adhered and fixed to the first side wall of each battery cell in two adjacent battery groups.

Through arrangement in this way, the connection strength and connection stability between the partition and the battery cell can be improved, thereby ensuring the safety and reliability of the battery. In addition, the partition and each battery cell are integrally connected by adhesion, so that the partition and each battery cell of the battery group can be integrally adhered and then placed into the box as a whole, which facilitates the assembly of batteries into groups and also makes adjacent battery groups be arranged more compact to improve the space utilization efficiency of the box.

In some embodiments, the partition is used to regulate the temperature of the battery cell, and a medium flow channel is provided in the partition.

Through the above arrangement, the partition can not only perform thermal management of the battery cells, but also serve as a structural member of the box to improve the overall structural strength of the battery, thus eliminating the need for horizontal and vertical beams arranged inside the box, resulting in high integration and reduced cost, improving space utilization of the box, and achieving a lightweight design.

In some embodiments, the battery further includes a communication channel, an inlet pipe and an outlet pipe, the medium flow channels of the partitions are in communication through the communication channel, and the inlet pipe and the outlet pipe are in communication with the medium flow channel of the same partition.

Through arrangement in this way, each partition can meet the demand for heat exchange medium through only one inlet pipe and one outlet pipe, reducing the space occupation, and simplifying the structure of the inlet pipe and outlet pipe, which facilitates assembly and replacement, and is applicable to the supply of heat exchange medium for different numbers of partitions, thereby improving flexibility and versatility.

The box includes a top cover, a bottom cover and an accommodating frame. The bottom cover and the top cover are arranged opposite to each other at two ends of the accommodating frame in the height direction of the box. The position-limiting member is respectively connected to the accommodating frame and at least one of the top cover and the bottom cover.

Arrangement in this way facilitates processing, manufacturing and assembly, and further improves the structural strength.

In some embodiments, the box further includes a connection seat protruding from the accommodating frame along the second direction, and the connection seat is used to install the battery on the electrical apparatus.

By arranging the connection seat, the connection and fixation of the entire battery in the electrical apparatus to which it is applied is facilitated, thereby ensuring the safety performance of the battery.

In some embodiments, the battery cell includes an electrode terminal, and along the height direction, the surface of the battery cell facing away from the electrode terminal is connected to the top cover or the bottom cover.

Through arrangement in this way, during battery manufacture, the battery cells can be placed vertically in the box, or placed upside down in the box, which can improve the selectivity of battery manufacturing and forming.

In a second aspect, embodiments of the present application provide an electrical apparatus including the battery in any of the aforementioned implementations, so that the electrical apparatus can operate normally.

In a third aspect, the present invention provides a battery forming method, including: providing an even number of battery cells, the battery cells including a first side wall and a second side wall, the first side wall being the wall with the largest area among all the outer walls of the battery cell; dividing a plurality of battery cells into groups, each group including an even number of battery cells, and arranging the second side walls of the battery cells in the same group opposite to each other to form two or more battery groups; stacking the two or more battery groups and placing them into the box as a whole; electrically connecting the battery cells in the battery groups via a busbar; and providing two output members and arranging them on the same side of the first direction, where the two output members are electrically connected respectively to the two output terminals provided on the outermost battery group along the first direction, and the two output terminals are distributed along the second direction to form a power supply path together with the busbar.

In the embodiments of the present application, the battery manufactured by this forming method is convenient for processing and assembly, and can avoid use of a long output member across the battery group to form a power supply path, thereby reducing the weight and cost, and improving the integration and energy density of the battery.

### Description of Drawings

In order to illustrate the technical solutions of the embodiments of the present application more clearly, the drawings required in the embodiments of the present application will be briefly introduced below. Obviously, the drawings described below represent only some embodiments of the present application. For those of ordinary skill in the art, other drawings can also be obtained according to the drawings without any creative effort.
Fig. 1 is a schematic structural view of a vehicle according to an embodiment of the present application;
Fig. 2 is a schematic exploded view of a battery cell according to an embodiment of the present application;
Fig. 3 is a schematic exploded view of a battery according to an embodiment of the present application;
Fig. 4 is a partial top view of a battery according to an embodiment of the present application;
Fig. 5 is a partial top view of a battery according to another embodiment of the present application;
Fig. 6 is a partial top view of a battery according to yet another embodiment of the present application;
Fig. 7 is a schematic partial exploded view of a battery according to an embodiment of the present application;
Fig. 8 is a schematic partial exploded view of a battery according to another embodiment of the present application; and
Fig. 9 is a schematic flow chart of a battery forming method according to an embodiment of the present application.

The drawings are not drawn to actual scale.

In the drawings:
1000-vehicle; 100-battery; 200-controller; 300-motor;
10-box; 10a-opening; 11-top cover; 12-bottom cover; 13-accommodating frame; 14-connection seat;
20-battery group; 21-battery cell; 211-first side wall; 212-second side wall; 201-end cap assembly; 201a-electrode terminal; 202-case; 203-electrode assembly; 203a-positive electrode tab; 203b-negative electrode tab;
30-busbar; 31-first busbar; 32-second busbar; 40-output member; 50-position-limiting member; 51-accommodating groove; 60-output member base;
70-partition; 71-communication channel; 72-inlet pipe; 73-outlet pipe;
X-first direction; Y-second direction; Z-height direction.

### Detailed Description

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

In the description of the embodiments of the present application, unless otherwise explicitly specified and defined, the expression a first feature being "on" or "under" a second feature may be a case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below", "underneath" or "under" the second feature may represent the case where the first feature is directly underneath or obliquely underneath the second feature, or only means that the level of the first feature is lower than that of the second feature.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The applicant noticed that existing batteries usually include a plurality of battery cells. A plurality of connecting pieces need to be provided between the battery cells for electrical connection, and a long connecting piece needs to be provided to form the main output terminal. However, this arrangement will cause a complicated structure of arrangement of connecting pieces in the battery, is not beneficial for processing and assembly, and will also increase weight and cost.

In order to improve the overall integration and energy density of the battery, facilitate processing and assembly, reduce weight and cost, the applicant found that the structure and layout of the battery can be improved.

Based on the above considerations, in order to improve the overall integration and energy density of the battery, facilitate processing and assembly, and reduce weight and cost, the applicant designed a battery after in-depth research, including a box, a battery group, a busbar and two output members. The battery group is arranged in the box. The number of battery groups is two or more and they are arranged along a first direction. Each battery group includes an even number of battery cells arranged along a second direction perpendicular to the first direction. The battery cell includes a first side wall and a second side wall connected to each other. The first side wall is the wall with the largest area among all the outer walls of the battery cell. The first direction is perpendicular to the first side wall. The second side walls of two adj acent battery cells are arranged opposite to each other along the second direction. The busbar is used to electrically connect two adjacent battery cells. The two output members are arranged on the same side of the first direction. The outermost battery group along the first direction is provided with two output terminals distributed along the second direction. The two output members are electrically connected respectively to the two output terminals to form a power supply path together with the busbar.

In such a battery, the battery group is placed inside the box to meet sealing requirements. The busbar is used to electrically connect two adjacent battery cells. The outermost battery group along the first direction is provided with two output terminals. The two output members are provided on the same side of the first direction. The two output members are electrically connected respectively to the two output terminals to form a power supply path together with the busbar. The two output members and the two output terminals face the same side, which can simplify the connection structure, improve the space utilization inside the box, and facilitate processing and assembly, while avoiding use of a long output member across the battery group to form a power supply path, reducing the weight and cost, and improving the compactness and energy density of the battery cell.

The technical solutions described in the embodiments of the present application are applicable to electrical apparatus using batteries.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys, electric aircraft toys, and the like. The electric tool includes metal cutting electric tools, grinding electric tools, assembly electric tools and railway electric tools, such as electric drills, electric grinders, electric wrenches, electric screwdrivers, electric hammers, impact drills, concrete vibrators, electric planers, and the like. The electrical apparatus is not specially limited in the embodiments of the present application.

It should be understood that the technical solutions described in the embodiments of the present application are not only applicable to the electrical apparatus described above, but also applicable to all electrical apparatus using batteries. However, for the sake of brevity, the following embodiments are described by taking an electric vehicle as an example.

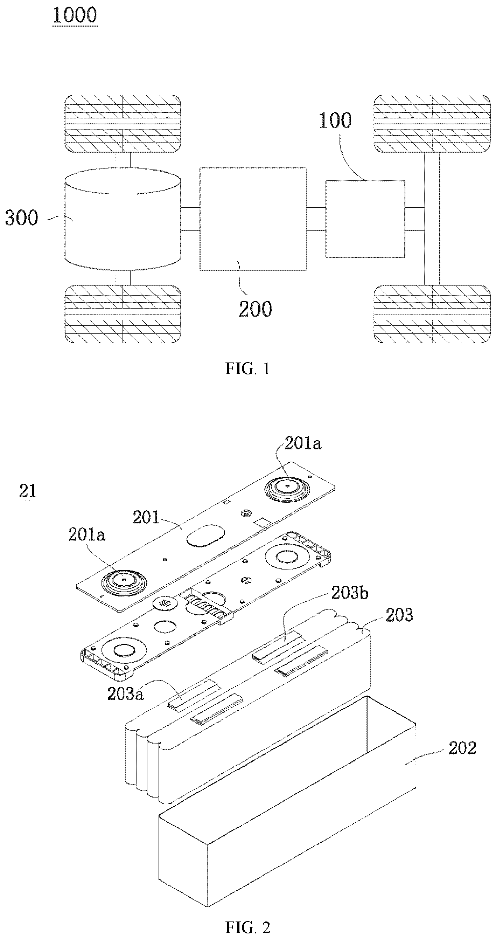

Refer to Fig. 1, which is a schematic structural view of a vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, an extended-range electric vehicle, or the like. The vehicle 1000 is provided with a battery 100 inside, and the battery 100 may be provided at the bottom or head or tail of the vehicle 1000. The battery 100 may be used to power the vehicle 1000. For example, the battery 100 may serve as an operating power source of the vehicle 1000. The vehicle 1000 may further include a controller 200 and a motor 300. The controller 200 is used to control the battery 10 to power the motor 300, for example, for meeting the operating power demand when the vehicle 1000 is starting, navigating and traveling.

In some embodiments of the present application, the battery 100 not only may serve as an operating power source of the vehicle 1000, but also as a driving power source of the vehicle 1000, thus replacing or partially replacing fuel or natural gas to provide driving power for the vehicle 1000.

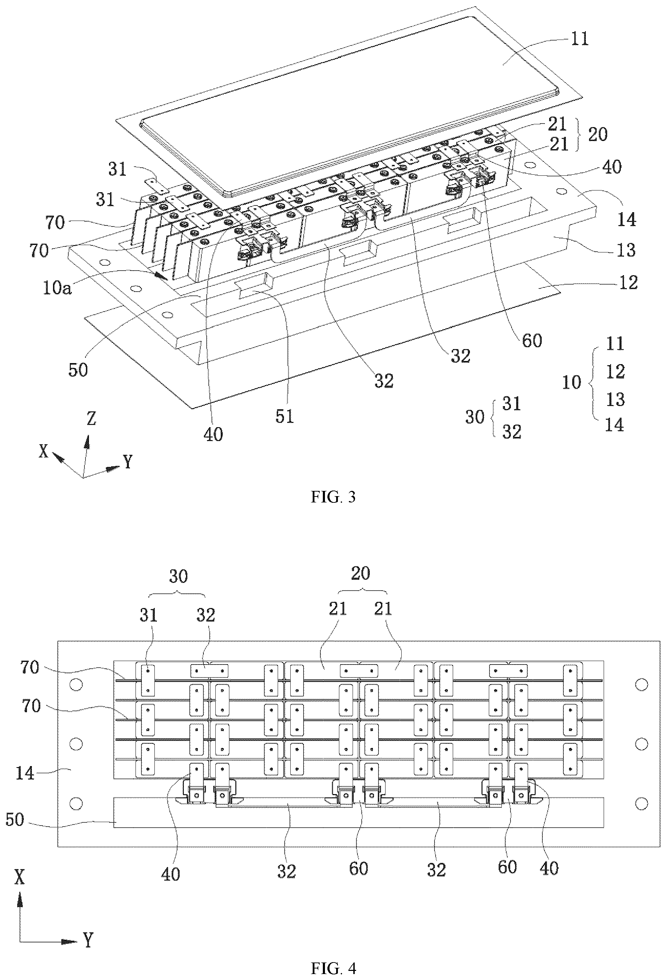

Referring to Fig. 2 and Fig. 3, the present invention provides a battery 100, including a box 10, a battery group 20, a busbar 30 and two output members 40. The battery group 20 is arranged in the box 10. The number of the battery groups 20 is two or more and they are arranged along a first direction X. Each battery group 20 includes an even number of battery cells 21 arranged in a second direction Y. The second direction Y is perpendicular to the first direction X. The battery cells 21 include a first side wall 211 and a second side wall 212 connected to each other. The first side wall 211 is the wall with the largest area among all the outer walls of the battery cell 21.The first direction X is perpendicular to the first side wall 211. The second side walls 212 of two adjacent battery cells 21 are arranged opposite to each other along the second direction Y. The busbar 30 is used to electrically connect two adjacent battery cells 21. The two output members 40 are arranged on the same side of the first direction X. The outermost battery group 20 along the first direction X is provided with two output terminals distributed along the second direction Y. The two output members 40 are electrically connected respectively to the two output terminals to form a power supply path together with the busbar 30.

According to the invention, the second direction Y is perpendicular to the first direction X. Optionally, the first direction X may be the length direction of the box 10, and accordingly, the second direction Y is the width direction of the box 10. Of course, the first direction X may also be the width direction of the box 10, and accordingly, the second direction Y is the length direction of the box 10.

The box 10 may be a simple three-dimensional structure such as a single cuboid or a cylinder, or a complex three-dimensional structure composed of simple three-dimensional structures such as a cuboid or a cylinder. The embodiments of the present application are not limiting in this regard. The box 10 may be made of alloy materials such as aluminum alloy, iron alloy, etc., or polymer materials such as polycarbonate, polyisocyanurate foam, or composite materials such as glass fiber plus epoxy resin. The embodiments of the present application are not limiting in this regard either.

The box 10 is used to accommodate the battery cells 21. The box 10 may be of various structures, as long as the sealing requirements are ensured.

In the battery 100, the number of the battery groups 20 is two or more and they are arranged along the first direction X. Each battery group 20 includes an even number of battery cells 21 arranged along the second direction Y. The number of the battery cells 21 may be two, four, six, eight, ten or multiple battery cells may be provided, as long as the number of the battery cells 21 is an even number. If there are multiple battery cells 21, the multiple battery cells 21 can be connected in series, in parallel, or in a hybrid pattern along the second direction Y to form a battery group 20, and multiple battery groups 20 can then be connected in series, in parallel, or in a hybrid pattern along the first direction X to form a whole body that is accommodated in the box 10. The hybrid connection means that the multiple battery cells 21 are both connected in series and in parallel.

In the present application, the battery cell 21 may include a lithium ion battery cell 21, a sodium ion battery cell 21, a magnesium ion battery cell 21, or the like, and the embodiments of the present application are not limiting in this regard. The battery cell 21 may be flat, cuboid, or in other shapes, and the embodiments of the present application are not limiting in this regard either. The battery cells 21 are generally classified into three types according to their packaging manners: cylindrical battery cells 21, cubic prismatic battery cells 21, and pouch battery cells 21, and the embodiments of the present application are not limiting in this regard either. However, for the sake of simplicity of description, the following embodiments take the cubic prismatic battery cell 21 as an example.

Referring to Fig. 2, the battery cell 21 refers to the smallest unit that constitutes the battery 100. The battery cell 21 includes an end cap assembly 201, a case 202 and an electrode assembly 203.

The end cap assembly 201 is a component that covers the opening of the case 202 to isolate the internal environment of the battery cell 21 from the external environment. Without limitation, the shape of the end cap assembly 201 may be adapted to that of the case 202 in order to fit the case 202. Optionally, the end cap assembly 201 may be made of a material with a certain hardness and strength (such as aluminum alloy). In this way, the end cap assembly 201 is less likely to deform when subjected to squeezing and collision, so that the battery cell 21 can have higher structural strength and improved safety performance as well. The end cap assembly 201 may be provided with functional components such as electrode terminals 201a. The electrode terminal 201a may be used to be electrically connected with the electrode assembly 203 for outputting or inputting electrical energy of the battery cell 21. In some embodiments, the end cap assembly 201 may also be provided with a pressure relief mechanism to relieve pressure inside the battery cell when internal pressure or temperature of the battery cell 21 reaches a threshold. The end cap assembly 201 may be made of various materials, such as copper, iron, aluminum, stainless steel, aluminum alloy, and plastic, and the embodiments of the present application are not specifically limiting in this regard. In some embodiments, an insulating member may also be provided on the inner side of the end cap assembly 201, and the insulating member may be used to isolate the electrical connection components in the case 202 from the end cap assembly 201 to reduce the risk of short circuits. For example, the insulating member may be plastic, rubber, and the like.

The case 202 is a component to cooperate with the end cap assembly 201 to form an internal environment of the battery cell 21. The internal environment formed can be used to accommodate the electrode assembly 203, electrolyte (not shown in the drawings), and other components. The case 202 and the end cap assembly 201 may be independent components, and an opening may be provided on the case 202. The end cap assembly 201 covers the opening at the opening to form the internal environment of the battery cell 21. Without limitation, the end cap assembly 201 and the case 202 can also be integrated. Specifically, the end cap assembly 201 and the case 202 can form a common connection surface before other components are placed in the case. When the interior of the case 202 needs to be packaged, the end cap assembly 201 is then enabled to cover the case 202. The case 202 may be of various shapes and sizes, such as a cuboid shape. Specifically, the shape of the case 202 may be determined according to the specific shape and dimension and size of the electrode assembly 203. The case 202 may be made of various materials, such as copper, iron, aluminum, stainless steel, aluminum alloy, and plastic, and the embodiments of the present application are not specifically limiting in this regard.

The electrode assembly 203 is a component in which electrochemical reaction occurs in the battery cell 21. One or more electrode assemblies 203 may be contained in the case 202. The electrode assembly 203 is mainly formed by winding or stacking a positive electrode plate and a negative electrode plate, and usually a separator is provided between the positive electrode plate and the negative electrode plate. The portions of the positive electrode plate and the negative electrode plate that contain active material constitute the main body of the electrode assembly 203, and the portions of the positive electrode plate and the negative electrode plate without active material each constitute tabs. The positive electrode tab 203a and the negative electrode tab 203b may be located together at one end of the main body or located respectively at two ends of the main body. During the charging and discharging of the battery 100, the positive electrode active material and the negative electrode active material react with the electrolyte, and the electrode tabs are connected to the electrode terminals 201a to form a current loop.

Continue to refer to Fig. 3. The battery 100 provided by the embodiments of the present application also includes a busbar 30 and two output members 40. The busbar 30is used to electrically connect two adjacent battery cells 21. The two output members 40 are provided on the same side of the first direction X. The outermost battery group 20 along the first direction X is provided with two output terminals distributed along the second direction Y. The two output terminals 40 are electrically connected respectively to the two output terminals to form a power supply path together with the busbar 30.

Through arrangement in this way, the two output members 40 and the two output terminals of the battery 100face the same side, which can simplify the connection structure, improve the space utilization inside the box 10, facilitate processing and assembly, while avoiding use of a long output member 40 across the battery group 20 to form a power supply path, reducing the weight and cost, and improving the compactness and energy density of the battery cell 21.

Two adjacent battery cells 21 are electrically connected via the busbar 30. Optionally, the busbar 30 can be connected to the electrode terminals 201a on the adjacent battery cells 21, so that the multiple battery cells 21 in the same battery group 20 or two adjacent battery groups 20 are connected in series, in parallel or in a hybrid pattern.

The outermost battery group 20 along the first direction X is provided with two output terminals to ensure that the two output members 40 can be arranged on the same side of the first direction, so as to simplify the structure and improve the space utilization inside the box 10.

Optionally, the busbar 30 may be made of any one material of aluminum, copper, iron or the like.

Optionally, the output member 40 may be made of any one material of aluminum, copper, iron or the like.

Optionally, the output member 40 may be integrally formed through a stamping process, or be integrally formed by casting.

The two output terminals are distributed along the second direction Y, so that the two output members 40 are spaced apart in the second direction Y, thereby avoiding safety problems such as short circuit caused by contact between adjacent output members 40, and ensuring the safety performance of the battery 100.

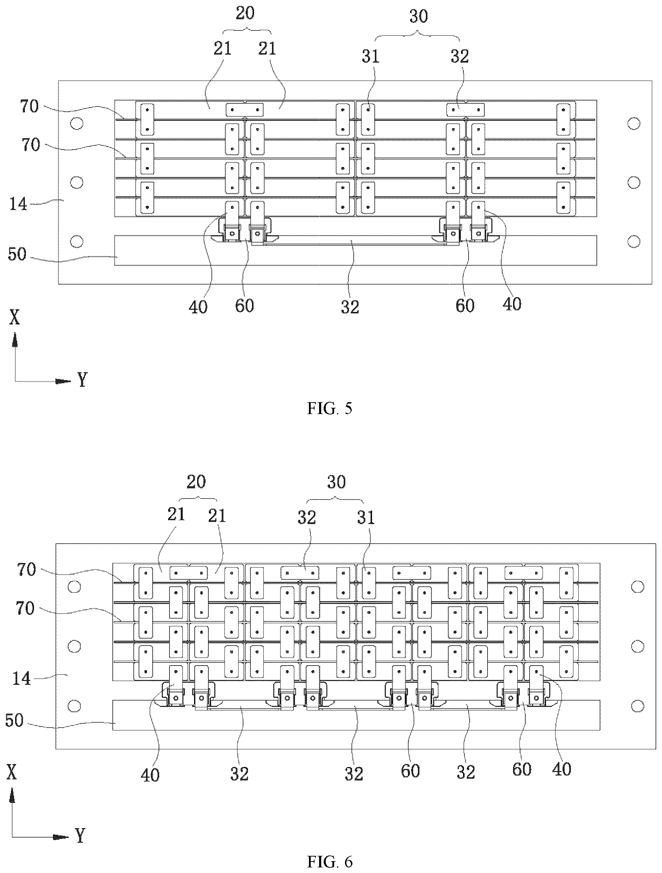

The number of battery cells 21 included in each battery group 20 is an even number. Optionally, as shown in Fig. 5, the number of battery cells 21 included in each battery group 20 can be set to 4. Of course, as shown in Fig. 4, the number can also be set to 6, or as shown in Fig. 6, it can be set to 8.

Through arrangement in this way, after the busbar 30 electrically connects two adjacent battery cells 21, it can be ensured that the two output terminals are formed on the outermost battery group 20 along the first direction X and are distributed along the second direction Y, thus ensuring that the two output members 40 are provided on the same side of the first direction X, so as to avoid use of a long output member 40 across the battery group 20 to form a power supply path, reduce the weight and cost, and improve the compactness and energy density of the battery cell 21.

The battery 100 provided in the embodiments of the present application is provided with two output members 40 that are electrically connected to the two output terminals respectively. The two output terminals are located in the outermost battery group 20 along the first direction X and are distributed along the second direction Y, so that the two output members 40 are provided on the same side of the first direction X, which can simplify the connection structure, improve the space utilization inside the box 10, facilitate processing and assembly, while avoiding use of a long output member 40 across the battery group 20 to form a power supply path, reducing the weight and cost, and improving the integration and energy density of the battery 100.

The battery 100 provided in the embodiment of the present application adopts the above structural form. During forming, the second side walls 212 of the even number of battery cells 21 can be arranged opposite to each other along the second direction Y to form the battery group 20. Multiple battery groups 20 are arranged along the first direction X. Two adjacent battery cells 21 are electrically connected via the busbar 30 and two output terminals are formed in the outermost battery group 20 along the first direction X and are distributed along the second direction Y. Two output members 40 are further provided to be electrically connected to the two output terminals respectively, so as to form a power supply path together with the busbar 30. With this forming method, it is possible to avoid use of a long output member 40 across the battery group 20 to form a power supply path, reduce the weight and cost, improve the compactness and energy density of the battery 100, simplify the connection structure and improve the space utilization inside the box 10.

Referring to Figs. 2 to 6, in some embodiments, the busbar 30 includes a plurality of first busbars 31 and a plurality of second busbars 32. The first busbars 31 are used to electrically connect two adjacent battery cells 21 along the first direction X, and the second busbars 32 are used to electrically connect two adjacent battery cells 21 along the second direction Y.

Through arrangement in this way, the busbars 30 can be assembled regularly, improving the assembly efficiency, and ensuring the effectiveness of forming two output terminals on the outermost battery group 20 in the first direction X, thereby ensuring that the two output members 40 are arranged on the same side of the first direction X.

Optionally, the first busbar 31 can electrically connect the electrode terminals 201a on adjacent battery cells 21 in the first direction X to realize series, parallel or hybrid connection of multiple battery cells 21 in the same battery group 20. The second busbar 32 can electrically connect the electrode terminals 201a on adjacent battery cells 21 in the second direction Y to realize series, parallel or hybrid connection of multiple battery cells 21 in two adjacent battery groups 20.

Continue to refer to Figs. 2 to 6. In some embodiments, the second busbar 32 is used to electrically connect two adjacent battery cells 21 in the outermost battery group 20 along the first direction X.

Through arrangement in this way, all the battery cells 21, except the adjacent battery cells 21 in the outermost battery group 20 along the first direction X, are connected by the first busbar 31, so that two output terminals can be formed for the outermost battery group 20 along the first direction X, thereby ensuring the effectiveness of arrangement of the two output members 40 on the same side of the first direction X.

In some embodiments, the two output terminals are respectively provided on the two battery cells 21 located at the ends along the second direction in the outermost battery group 20.

Through arrangement in this way, it is possible to ensure the effectiveness of arrangement of the two output members 40 on the same side of the first direction X, thus simplifying the connection structure, improving space utilization inside the box 10 and facilitating processing and assembly.

Moreover, the length of the two output members 40 can be reduced, which can reduce the weight and cost, and improve the integration and energy density of the battery 100.

The battery 100 further includes a position-limiting member 50 fixedly connected inside the box 10 and abutting against the first side wall 211 of the battery cell 21. The position-limiting member 50 is used to limit the deformation of the battery cell 21 in the first direction X

The position-limiting member 50 is provided to limit the deformation of the battery cell 21 in the first direction X so as to protect the operation safety of the battery cell 21 and thus ensure the safety performance of the battery 100. Moreover, it can provide positioning for the battery group 20, which facilitates the accurate and rapid installation of the battery group 20 at the preset position in the box 10, avoids deviation during installation that prevents other components from being installed accurately, and improves the installation efficiency and installation accuracy, thereby ensuring desirable quality of the battery 100.

Optionally, the position-limiting member 50 and the box 10 may be of an integrally formed structure and be formed through processes such as bending and stamping. Of course, the position-limiting member 50 and the box 10 may also be provided separately, and then integrally connected through welding, adhesion, or the like.

Optionally, the number of position-limiting members 50 may be one or two, and of course, multiple position-limiting members may be provided.

The position-limiting member 50 can limit the expansion and deformation of the battery cell 21 in the first direction X to protect the safe operation of the battery cell 21 and consequently ensures the safety performance of the battery 100.

In some embodiments, in the height direction Z of the box 10, the ratio of the height of the position-limiting member 50 to the height of the battery cell 21 can be set between 2/3 and 11/10, including the two end values of 2/3 and 11/10, which can not only provide the structural strength and expansion resistance effects, but also save space and improve space utilization.

Continue to refer to Figs. 3 to 6. The battery 100 further includes an output member base 60 arranged on the position-limiting member 50 to support the output member 40. Optionally, the output base 60 includes insulating material.

Through arrangement in this way, the installation and fixation of the position-limiting member 50 are facilitated and contact short circuits can be avoided, thereby ensuring the safety performance of the battery 100.

Optionally, the number of output member bases 60 may be one or two, and of course, multiple output member bases may be provided.

In some embodiments, the position-limiting member 50 is provided with an accommodating groove 51, and the output member base 60 at least partially extends into the accommodating groove 51.

The accommodating groove 51 can limit the position of the output member base 60 to prevent its displacement that causes safety problems for the battery 100, while providing positioning effects to facilitate the installation of the output member base 60 and improve the manufacturing efficiency.

Optionally, the number of accommodating grooves 51 may be one or two, and of course, multiple accommodating grooves may be provided. Optionally, the shape of the accommodating groove 51 can be set to match that of the output member base 60, and the output member base 60 can fit exactly into the accommodating groove 51 so that its position can be limited and prevented from displacement.

Optionally, the output member bases 60 and the accommodating grooves 51 can be arranged in one-to-one correspondence in their numbers, or in multiple-to-one correspondence in their numbers, that is, multiple output member bases 60 can be arranged in the same accommodating groove 51.

For example, the position-limiting member 50 is provided with two or more accommodating grooves 51, and the two or more accommodating grooves 51 are spaced apart.

Optionally, the accommodating grooves 51 can be formed by stamping, so that the accommodating grooves 51 can be quickly formed on the position-limiting member 50. Such a process is simple and can save materials, which facilitates achieving a lightweight design.

In some embodiments, the position-limiting member 50 extends along the second direction Y and is fixedly connected to the box 10 at both ends in the second direction Y.

Through arrangement in this way, the overall structural strength of the box 10 can be improved, the ability to resist expansion of the battery cell 21 can be improved, and safety performance can be ensured.

In some embodiments, the position-limiting member 50 abuts against the first side wall 211 of the battery cell 21 in the outermost battery group 20.

Through arrangement in this way, the battery group 20 can be positioned, which is beneficial to installation efficiency and installation accuracy, thereby ensuring that desirable quality of the battery 100.

Optionally, the number of the position-limiting member 50 is one, and it abuts against the first side wall 211 of the battery cell 21 in the outermost battery group 20.

Optionally, the number of the position-limiting members 50 is two, and they abut against the first side wall 211 of the battery cell 21 in the two outermost battery groups 20.

In some optional embodiments, the position-limiting member 50 is provided in the form of a plate structure, which reduces the layout space of the position-limiting member 50, allowing the box 10 to accommodate more battery cells 21, and improving the space utilization inside the box 10.

For example, the cross-sectional area of each part of the position-limiting member 50 in the second direction Y is the same, which facilitates production and manufacture and saves the space inside the box 10. Moreover, each part of the position-limiting member 50 can be closely fitted with the first side wall 211 of each battery cell 21 to improve the support and protection effect and improve the space utilization inside the box 10.

The position-limiting member 50 abuts against the first side wall 211 of the battery cell 21, which can limit the deformation of the battery cell 21 in the first direction X and when the battery cell 21 expands during charging and discharging, provide buffering for the battery cell 21 and provide a force opposite to the expansion force, which improves the operation safety of the battery cell 21, thus ensuring the safety and reliability of the battery 100. At the same time, a pressing force can be provided to the battery group 20 to achieve the function of limiting and fixing, and ensure desirable quality of the battery 100.

Moreover, the position-limiting member 50 is arranged in the box 10 and abuts against the battery cell 21, so that the number of end plates and connectors can be reduced, which improves the installation efficiency and accuracy, thereby simplifying the preparation process, reducing the manufacturing cost and the overall weight of the battery 100, and realizing a lightweight design.

In addition, through arrangement in this way, the position-limiting member 50 can also serve as a structural member of the box 10 to meet the structural strength requirements while allowing a high degree of integration, and the position-limiting member 50 and the battery cell 21 can be more closely fitted with each other, which improves the compactness and improve the space utilization inside the box 10.

By providing the first side wall 211 as the wall with the largest area among all the outer walls of the battery cell 21, the position-limiting member 50 can better limit and fix the battery cell 21, resist expansion deformation, and improve the structural strength, thereby better ensuring the safety performance of the battery 100.

For example, two position-limiting members 50 may be provided. The two position-limiting members 50 are respectively provided between the box 10 and the first side wall 211 of the battery cell 21 and abut against the first side wall 211. They can limit and fix the battery cell 21 and resist the expansion force, and can also prevent the battery cell 21 from coming into contact with the box 10 to avoid electrical connection or thermal runaway. Meanwhile, the position-limiting member 50 can also provide support and protection for the battery cell 21, and improve the structural strength.

The battery 100 provided in the embodiments of the present application adopts the above-mentioned structural form. During forming, the second side walls 212 of the battery cells 21 in the same battery group 20 can be arranged opposite to each other, and thus the second side walls 212 of the two adjacent battery cells 21 are connected to form a battery group 20 including two or more battery cells 21 distributed along the second direction Y of the box 10. Thereafter, a tool is used to clamp the battery group 20 and place it into the box 10 between the position-limiting members 50 spaced apart along the first direction X, then the tool is removed, and each battery cell 21 in the battery group 20 rebounds and is pressed tightly against the position-limiting member 50 so that the position-limiting member 50 abuts against the first side wall 211 of the battery cell 21, and then the box 10 is closed to complete preparation of the battery 100. Through this forming method, it is possible to improve the space utilization of the box 10 and achieve a lightweight design while meeting the requirements of limiting and fixing and expansion deformation resistance, and to allow simple preparation, facilitate forming, and reduce costs.

In some embodiments, a plurality of cavities penetrating along the second direction Y are provided in the position-limiting member 50.

Optionally, the plurality of cavities may be arranged to be spaced apart in the first direction X, and of course, may also be arranged to be spaced apart in the height direction Z.

Optionally, in the height direction Z, the plurality of cavities may be arranged in one row, and of course, may also be arranged in multiple rows.

For example, the plurality of cavities are spaced apart and arranged in a row in the height direction Z to reduce the extension length of the position-limiting member 50 in the first direction X so that there is more space in the box 10 to accommodate more battery cells 21, thereby increasing the energy density of the battery 100.

By arranging a plurality of cavities penetrating along the second direction Y in the position-limiting member 50, when the battery cell 21 expands during charging and discharging, the space in the cavities can be compressed in the first direction X, so that the position-limiting member 50 can limit the deformation of the battery cell 21 and buffer and absorb the expansion force of the battery cell 21, thereby ensuring the safety performance of the battery cell 21.

In addition, the provision of the cavities can also reduce the weight of the position-limiting member 50 and reduce the costs, thereby achieving a lightweight design, while improving the overall energy density of the battery 100.

In some embodiments, the number of position-limiting members 50 provided as plate-like structures may be set to two. The two plate-like structures are spaced apart in the first direction X, and the battery group 20 is sandwiched between the two plate-like structures.

For example, there are two position-limiting members 50 of a plate-like structure spaced apart in the first direction X, and the battery group 20 is sandwiched between the two plate-like structures, that is, the plate-like structures are located between the battery group 20 and the inner wall of the box 10 and abut against the first side wall 211. The two plate-like structures can each be used to limit the deformation of the battery cell 21 in the first direction X of the box 10, thereby better meeting the limiting and fixing and expansion resistance requirements, and better ensuring the security performance of the battery 100.

Continue to refer to Figs. 3 to 7. In some embodiments, a partition 70 is provided between two adjacent battery groups 20 along the first direction X, and the partition 70 abuts against the first side wall 211 of each battery cell 21 in the two adjacent battery groups 20.

Through arrangement in this way, the partition 70 can achieve at least one of the functions of improving structural strength and improving expansion force resistance.

Optionally, the partition 70 abuts against the first side wall 211 of each battery cell 21 in the two adjacent battery groups 20, and can serve as a structural member of the box 10 to support the battery cell 21 and improve the structural strength, and the partition 70 can also be used to resist the expansion force of the battery cell 21 against which it abuts, thereby ensuring the safety performance of the battery 100.

In some embodiments, the ratio of the height of the partition 70 in the height direction Z to the height of the battery cell 21 can set between 2/3 and 11/10, including the two end values of 2/3 and 11/10, which can not only provide the structural strength and expansion resistance effects, but also save space and improve space utilization.

Furthermore, optionally, the partition 70 can also be used for thermal management of the abutting battery cell 21 to ensure that the battery cell 21 is within a suitable temperature range, thereby ensuring the safety performance of the battery 100.

In addition, the partition 70 can also prevent the battery cells 21 of two adjacent battery groups 20 in the first direction X from being in direct contact and causing problems such as short circuits.

Optionally, the number of battery groups 20 is two, and of course, multiple battery groups may be provided.

Similarly, the number of the partition 70 may be set to one. When the number of the battery groups 20 is set to two, one partition 70 is sandwiched between the two battery groups 20. Of course, multiple partitions 70 may also be provided. When multiple battery groups 20 are provided, one partition 70 is sandwiched between every two adjacent battery groups 20.

Optionally, two or more battery groups 20 are distributed along the first direction X, and each battery group 20 includes two or more battery cells 21 distributed along the second direction Y of the box 10. The partition 70 can prevent the battery cells 21 of two adjacent battery groups 20 in the first direction X from being in direct contact and causing problems such as short circuits.

In some embodiments, the partition 70 is adhered and fixed to the first side wall 211 of each battery cell 21 in two adjacent battery groups 20.

Through arrangement in this way, the connection between the partition 70 and each battery cell 21 is firmer and has good desirability, thereby ensuring the safety and reliability of the battery 100. In addition, the partition 70 and each battery cell 21 are integrally connected by adhesion, so that the partition 70 and each battery cell 21 of the battery group 20 can be integrally adhered and then placed into the box 10 as a whole, which facilitates assembly of the batteries 100 into groups and also makes adjacent battery groups 20 be arranged more compactly to improve the space utilization efficiency of the box 10.

In addition, the use of adhesion can reduce consumables and overall weight, and achieve a lightweight design of the battery 100. Furthermore, it can also simplify the manufacturing process and improve production efficiency and assembly efficiency.

Optionally, a connection adhesive layer may be provided between the partition 70 and the first side wall 211 so that the partition 70 is adhered and fixed to each battery cell 21.

Optionally, the connection adhesive layer may include thermally conductive structural adhesive, which not only has good adhesion effect, but also has thermal conductivity, aging resistance, fatigue resistance, corrosion resistance and other properties, and can improve the connection strength and thermal management efficiency between the battery cell 21 and the partition 70, allowing heat to be transferred between the battery cell 21 and the partition 70 more quickly. Of course, the connection adhesive layer also includes double-sided adhesive.

In some embodiments, the partition 70 serves to regulate the temperature of the battery cell 21, and a medium flow channel is provided in the partition 70.

Optionally, the partition 70 can be configured as a heat exchange plate. The heat exchange plate is sandwiched between two adjacent battery groups 20 and connected to the first side wall 211. Through this arrangement, the temperature of the battery cell 21 in contact with it can be regulated to meet the thermal management requirements of the battery cell 21. Meanwhile, since the first side wall 211 is the wall with the largest area among all the outer walls of the battery cell 21, the contact area between the heat exchange plate and the battery cell 21 can be increased, thereby improving the thermal management efficiency of the battery cell 21.

Each battery cell 21 may have two first side walls 211, that is, the two first side walls 211 of each battery cell 21 are respectively connected to the partition 70 to better improve thermal management efficiency and ensure the stable temperature of the battery cell 21.

Thermal management should be understood to mean that the heat between the partition 70 and the battery cell 21 can be transferred between the two. For example, the partition 70 is in direct contact with the battery cell 21 to achieve contact heat exchange, or a thermal conductive structure (such as thermal conductive adhesive) is provided between the partition 70 and the battery cell 21 for heat exchange. Specifically, the partition 70 dissipates heat of the battery cell 21 or cool down the battery cell 21 or heats it to control the temperature of the battery cell 21 within an appropriate range, thereby improving the service life and safety performance of the battery cell 21. Moreover, when thermal runaway occurs in a battery cell 21, the heat generated by the battery cell 21 with thermal runaway will be taken away by the partition 70 in contact with it, reducing the temperature of the battery cell 21 with thermal runaway and preventing adjacent battery cells 21 from experiencing thermal runaway, thereby ensuring the safety performance of the battery cells 21.

Optionally, a partition 70 is sandwiched between every two adjacent battery groups 20. It can be understood that one partition 70 can act on two battery groups 20 and exchange heat with them, and one battery group 20 can exchange heat with two partitions 70, which can improve thermal management efficiency and improve the safety and reliability of the battery cell 21.

A medium flow channel is provided in the partition 70 to enable the heat exchange medium (such as water, air, phase change material, etc.) to circulate in the medium flow channel to exchange heat with the battery cell 21, so that the partition 70 can complete thermal management of the battery cells 21.

Through the above arrangement, the partition 70 can also serve as a structural member of the box 10 to improve the overall structural strength of the battery 100, thus eliminating the need for horizontal and vertical beams arranged inside the box 10, resulting in high integration and reduced cost, improving space utilization of the box 10, and achieving a lightweight design. Moreover, since the first side wall 211 is the wall with the largest area among all the outer walls of the battery cell 21, the partition 70 can better exchange heat with the battery cell 21 to improve thermal management efficiency. In addition, by sandwiching the partition 70 between two adjacent battery groups 20, damage or even liquid leakage of the partition 70 in operating conditions such as collision and vibration can be avoided, which can improve the service life and safety and reliability of the partition 70, thereby improving the thermal management efficiency of the battery cell 21 and further ensuring the safety performance of the battery 100.

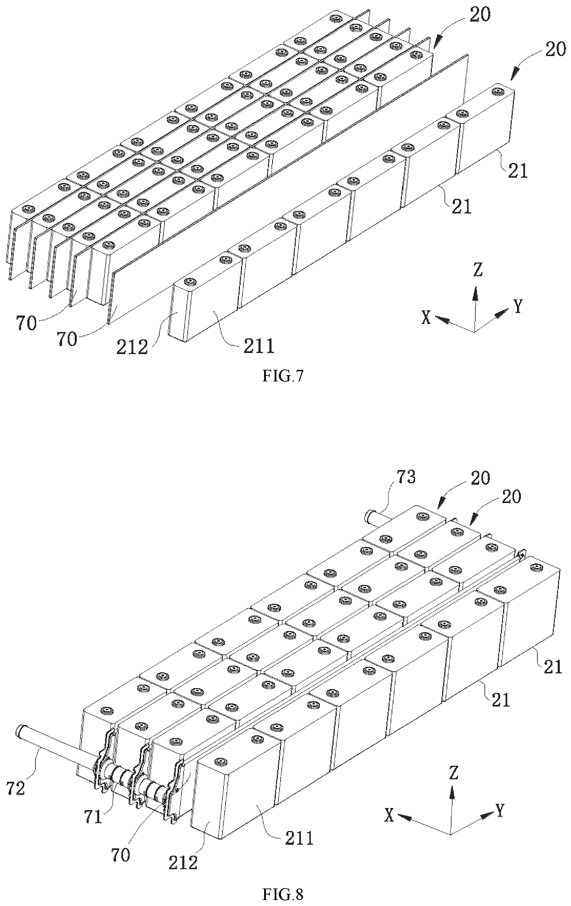

Refer to Fig. 8. In some embodiments, the battery 100 further includes a communication channel 71, an inlet pipe 72 and an outlet pipe 73, the medium flow channels of the partitions 70 are in communication through the communication channel 71, and the inlet pipe 72 and the outlet pipe 73 are in communication with the medium flow channel of the same partition 70.

Optionally, the communication channel 71, the inlet pipe 72 and the outlet pipe 73 can be arranged on the same side of the partition 70 extending along the second direction Y. Of course, they can also be arranged on two sides of the partition 70 extending along the second direction Y respectively.

Optionally, the extension direction of the inlet pipe 72 and the extension direction of the outlet pipe 73 may be the same or different.

Optionally, communication channels 71 are provided on both sides of the medium flow channel of one partition 70 extending along the second direction Y. The communication channels 71 on two sides of the medium flow channel of each partition 70 are connected in sequence and are respectively connected to the inlet pipe 72 and the outlet pipe 73, facilitating assembly and replacement and having greater flexibility.

Moreover, by arbitrarily matching the communication channel 71, the inlet pipe 72 and the outlet pipe 73 to adapt to various numbers of partitions 70, flexibility and versatility can be improved.

Optionally, connectors may be provided on both sides of the partition 70 extending along the second direction Y for connection with the communication channel 71 so as to improve the connection strength.

Through arrangement in this way, the medium flow channel of each partition 70 can meet the demand for heat exchange medium through only one inlet pipe 72 and one outlet pipe 73, reducing the space occupation, and simplifying the structure of the inlet pipe 72 and outlet pipe 73, which facilitates assembly and replacement, and is applicable to the supply of heat exchange medium for different numbers of partitions 70, improving flexibility and versatility.

In some embodiments, the box 10 is provided with a through hole, and the inlet pipe 72 and the outlet pipe 73 respectively extend out of the box 10 through the through hole.

Through arrangement in this way, one end of the inlet pipe 72 and the outlet pipe 73 is extended out of the box 10. The inlet pipe 72 can be connected to an external device that provides heat exchange medium, which facilitates acquiring the heat exchange medium and transporting it to the partition 70, and the outlet pipe 73 can be connected to an external device for storing heat exchange medium to discharge the heat exchange medium that exchanges heat with the battery cell 21, which facilitates the acquisition and discharge of the heat exchange medium, while reducing the risk of leakage of the heat exchange medium in the box 10, thereby ensuring the safety and reliability of the battery 100.

Optionally, the external device providing the heat exchange medium and that storing the heat exchange medium can be configured as the same device, or of course, they can also be two separate devices.

Continue to refer to Fig. 3. The box 10 includes a top cover 11, a bottom cover 12 and an accommodating frame 13. The bottom cover 12 and the top cover 11 are arranged opposite to each other at two ends of the accommodating frame 13 in the height direction Z of the box 10.The position-limiting member 50 is respectively connected to the accommodating frame 13 and at least one of the top cover 11 and the bottom cover 12.

The top cover 11, the bottom cover 12 and the accommodating frame 13 together enclose a box 10 accommodating the battery cell 21 to meet the sealing requirements.

Optionally, the accommodating frame 13 may have an opening 10a. Optionally, the accommodating frame 13 may be provided with an opening 10a on one side, that is, the accommodating frame 13 is integrally formed with one of the top cover 11 and the bottom cover 12, and the other closes the opening 10a and is connected with the accommodating frame 13 to enclose and form a box 10 to seal and protect the battery group 20. Of course, both side of the accommodating frame 13 may also be provided with an opening 10a, and the top cover 11 and the bottom cover 12 are used to seal the two openings 10a respectively and be connected with the accommodating frame 13 to enclose and form a box 10, so as to seal and protect the battery group 20.

In order to improve the sealing performance after the accommodating frame 13 is connected to the top cover 11 and the bottom cover 12, sealing members, such as sealant, sealing rings, etc., may be provided between the accommodating frame 13 and the top cover 11 or the bottom cover 12.

Optionally, the top cover 11, the bottom cover 12 and the accommodating frame 13 may be connected through bolts, hot melt self-tapping screws (Flowdrill Screws, FDS), adhesion, welding, etc., and the present application is not limiting in this regard.

Optionally, the top cover 11 or the bottom cover 12 may be made of a material with certain high hardness and strength (such as aluminum alloy), and is not prone to deformation and has higher structural strength to improve safety performance.

Optionally, the bottom cover 12 and the accommodating frame 13 may have an integrally formed structure. Of course, the bottom cover 12 and the accommodating frame 13 may also be provided separately and then integrally connected through welding, adhesion, or the like.

For example, the bottom cover 12 and the accommodating frame 13 are detachably connected, which can reduce costs and facilitate the replacement of the bottom cover 12 or the accommodating frame 13 when problems such as damage occur.

Optionally, the bottom cover 12 and the accommodating frame 13 may be made of the same material, and of course, may also be made of different materials.

Optionally, the bottom cover 12 may be made of a material with certain high hardness and strength (such as aluminum alloy), and is not prone to deformation and has higher structural strength to improve safety performance.

In some embodiments, the bottom cover 12 may be made of a material that is stronger than that of the accommodating frame 13, which can absorb external collision forces to achieve a buffering effect on the battery 100 and prevent the battery 100 from deformation and failure due to vibration, collision, etc. to improve the safety and reliability of the battery 100 and further improve the overall structural strength of the battery 100 so as to adapt to various operating conditions.

Optionally, the bottom cover 12 may also be provided with a reinforcing rib structure, which can better improve the structural strength of the battery 100.

By connecting the position-limiting member 50 to the accommodating frame 13 and at least one of the top cover 11 and the bottom cover 12 respectively, the overall structure of the battery 100 can be configured according to different demands, thereby improving versatility.

Optionally, the position-limiting member 50 may be connected to the accommodating frame 13 and the bottom cover 12. Of course, it may also be connected to the accommodating frame 13 and the top cover 11. Of course, it may also be connected to the accommodating frame 13, the top cover 11 and the bottom cover 12.

For example, the position-limiting member 50 is connected to the accommodating frame 13 and the bottom cover 12, and the position-limiting member 50 is spaced apart from the top cover 11. During assembly and forming, the battery cell 21 and the position-limiting member 50 may first be connected with the accommodating frame 13 and the bottom cover 12, and then the top cover 11 is covered to form a box 10 with a sealed space.

For example, the position-limiting member 50 is spaced apart from the top cover 11. Optionally, at least part of the top cover 11 can be recessed away from the battery cell 21 in the height direction Z to form a recess. There is a gap between the recess and the position-limiting member 50. When collision, vibration and other operating conditions occur, this gap can provide a buffering effect, which can better support and protect the position-limiting member 50 and the battery cell 21 to improve the safety and reliability.

In some embodiments, the box 10 further includes a connection seat 14 protruding from the accommodating frame 13 along the second direction Y, and the connection seat 14 is used to install the battery 100 on the electrical apparatus.

The connection seat 14 is provided to facilitate the connection and fixation of the battery 100 as a whole in the electrical apparatus to which it is applied, such as being fixed on the chassis of the vehicle 1000, etc., thereby improving the connection stability and making the connection firmer, while avoiding failure of the connection causing safety risk issues of the battery 100, ensuring the safety and reliability performance of battery 100.

Optionally, the connection seat 14 protrudes from one side of the accommodating frame 13 along the second direction Y. Of course, the accommodating frame 13 is provided with protruding connection seats 14 on both sides along the second direction Y.

Continue to refer to Figs. 2 and 3. In some embodiments, the battery cell 21 includes an electrode terminal 201a, and along the height direction Z, the surface of the battery cell 21 facing away from the electrode terminal201ais connected to the top cover 11 or the bottom cover 12.

Through arrangement in this way, the battery cell 21 can be placed vertically in the box 10, or placed upside down in the box 10, which can improve the selectivity in manufacturing and forming of the battery 100.

Optionally, along the height direction Z, the surface of the battery cell 21 facing away from the electrode terminal201ais connected to the bottom cover 12. It can be understood that the battery cell 21 is placed vertically in the box 10, that is, the electrode terminal201a is arranged close to the top cover 11, so that when the battery cell 21 is assembled to an electrical apparatus such as the vehicle 1000, the electrode terminal 201aof the battery cell 21 faces upward to prevent the electrode terminal201a from being scratched against the bottom cover 12 causing damage to the pressure relief mechanism and other structures when the battery 100 as a whole encounters bumps or vibrations, thereby ensuring the safety performance of the battery 100.

Optionally, along the height direction Z, the surface of the battery cell 21 facing away from the electrode terminal201ais connected to the top cover 11. It can be understood that the battery cell 21 is placed upside down in the box 10, so that when the battery cell 21 is assembled to an electrical apparatus such as the vehicle 1000, it can be placed upside down so that the electrode terminal 201a of the battery cell 21 faces downward, thereby improving the space utilization of the box 10 in the height direction Z, and ensuring the personal safety of the driver.

In some embodiments, the battery 100 further includes a buffer member provided between the electrode terminal 201a and the top cover 11 or the bottom cover 12along the height direction Z.

By providing a buffer, when the battery 100 as a whole encounters bumps or vibrations, the buffer can provide buffering to the electrode terminal 201a of the battery cell 21 to prevent it from scratching against the top cover 11 or the bottom cover 12 and causing damage to the pressure relief mechanism and other structures, thereby ensuring the safety performance of the battery 100.

In a third aspect, the present application provides an electrical apparatus including the battery 100 in any one of the above implementations, the battery 100 being configured to provide electric energy so that the electrical apparatus can operate normally.

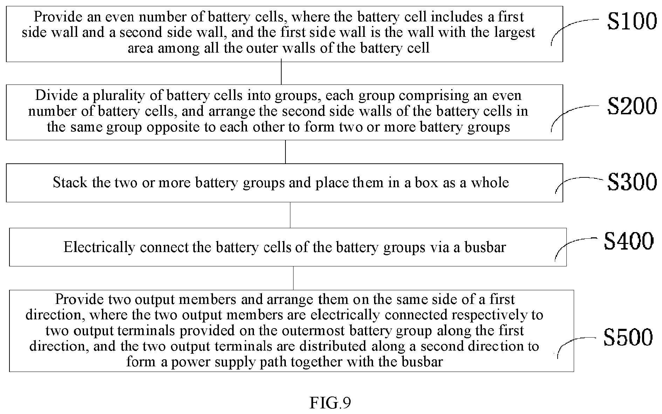

Refer to Fig. 9. In a third aspect, an embodiment of the present application provides a method for forming a battery 100, which includes the following steps.

S100: An even number of battery cells 21 are provided. The battery cell 21 includes a first side wall 211 and a second side wall 212. The first side wall 211 is the wall with the largest area among all the outer walls of the battery cell 21.

S200: A plurality of battery cells 21 are divided into groups, each group including an even number of battery cells 21. The second side walls 212 of the battery cells 21 in the same group are arranged opposite to each other to form two or more battery groups 20.

S300: Two or more battery groups 20 are stacked and placed in the box 10 as a whole.

S400: The battery cells 21 of the battery groups 20 are electrically connected via the busbar 30.

S500: Two output members 40 are provided and are arranged on the same side of the first direction X. The two output members 40 are electrically connected respectively to the two output terminals provided on the outermost battery group 20 along the first direction X, and the two output terminals are distributed along the second direction Y to form a power supply path together with the busbar 30.

In step S100, the provided battery cell 21 may be one of the battery cells 21 mentioned in each of the above embodiments

In step S200, a plurality of battery cells 21 are grouped, each group including an even number of battery cells 21. Optionally, each group may include four battery cells 21, six battery cells 21, or eight battery cells 21. The present application is not limiting in this regard, as long as an even number of battery cells 21 are included in each group.

In step S300, two or more battery groups 20 are placed into the box 10 together as a whole. Optionally, a tool may be used to clamp the battery groups 20 and place them into the box 10, and then the tool is removed. Each battery cell 21 in the battery group 20 rebounds and is pressed against the box 10 so that it is in interference fit with the box 10, and then the box 10 is closed to complete the preparation of the battery 100. Through this forming method, it is possible to improve the connection strength and the compactness between the battery cells 21, improve the space utilization of the box 10 and achieve a lightweight design, and allow simple preparation, facilitate forming, and reduce costs.

In step S400, the busbar 30 can electrically connect two adjacent battery cells 21 in the same battery group 20. Of course, it can also electrically connect two adjacent battery cells 21 in two adjacent battery groups 20.

Optionally, in step S500, two or more output members 40 are provided on the battery 100 on the same side of the first direction X, and are electrically connected respectively to the two output terminals provided on the outermost battery group 20 along the first direction X, and the two output terminals are distributed along the second direction Y to form a power supply path together with the busbar 30. With this forming method, it is possible to avoid use of a long output member 40 across the battery group 20 to form a power supply path, reduce the weight and cost, improve the compactness and energy density of the battery 100, simplify the connection structure and improve the space utilization inside the box 10.

Optionally, the two output terminals may be respectively arranged on the two battery cells 21 located at the ends in the second direction Y in the outermost battery group 20, which can reduce the length of the two output members 40, thereby reducing the weight and cost and improving the integration and energy density of the battery 100.

It should be noted that in case of no conflicts, embodiments and the features of the embodiments in the present application may be combined with each other.

Finally, it should be noted that the above embodiments are merely used for illustrating rather than limiting the technical solutions of the present application. Although the present application has been described in detail with reference to the above various embodiments, those of ordinary skill in the art should understand that the technical solutions described in the above various embodiments can be modified, or some of the technical features therein can be equivalently substituted. The invention is set out in the appended set of claims.

## Claims

1. A battery (100), comprising:
a box (10) comprising a top cover (11), a bottom cover (12) and an accommodating frame (13), the bottom cover (12) and the top cover (11) are arranged opposite to each other at two ends of the accommodating frame (13) in a height direction (Z) of the box (10).
battery groups (20) arranged in the box (10), wherein the number of the battery groups (20) is two or more and they are arranged along a first direction (X), each of the battery groups (20) comprises a number of battery cells (21) arranged in a second direction (Y) perpendicular to the first direction (X), the battery cell (21) comprises a first side wall (211) and a second side wall (212) connected to each other, the first side wall (211) is the wall with the largest area among all the outer walls of the battery cell (21), the first direction (X) is perpendicular to the first side wall (211), and the second side walls of two adjacent battery cells (21) are arranged opposite to each other along the second direction (Y);
a busbar used to electrically connect two adjacent battery cells (21); and
two output members (40) arranged on the same side of the first direction (X);
wherein the outermost battery group (20) along the first direction (X) is provided with two output terminals distributed along the second direction (Y), and the two output members (40) are electrically connected respectively to the two output terminals to form a power supply path together with the busbar, further comprising
a position-limiting member (50) fixedly connected inside the box (10) and abutting against the first side wall (211) of the battery cell (21) to limit the deformation of the battery cell (21) in the first direction (X),
the position-limiting member (50) being connected to the accommodating frame (13), **characterized in that**
each of the of the battery groups (20) comprises an even number of battery cells (21) arranged in the second direction (Y),
the position-limiting member (50) is connected to at
least one of the top cover (11) and the bottom cover (12), and
the battery (100) further comprises an output member base (60) provided on the position-limiting member (50) to support the output member (40).

2. The battery (100) according to claim 1, wherein the busbar comprises a plurality of first busbars (31) and a plurality of second busbars (32), where the first busbars (31) are used to electrically connect two adjacent battery cells (21) along the first direction (X), and the second busbars (32) are used to electrically connect two adjacent battery cells (21) along the second direction (Y).

3. The battery (100) according to claim 2, wherein the second busbar (32) is used to electrically connect two adjacent battery cells (21) in the outermost battery group (20) along the first direction (X).

4. The battery (100) according to any one of claims 1 to 3, wherein the two output terminals are respectively provided on the two battery cells (21) located at the ends in the second direction (Y) in the outermost battery group (20).

5. The battery (100) according to claim 1, wherein:
the position-limiting member (50) extends along the second direction (Y) and is connected to the box (10) at both ends in the second direction (Y).

6. The battery (100) according to claim 1 or 5, wherein the position-limiting member (50) abuts against the first side wall (211) of the battery cell (21) in the outermost battery group (20),
wherein preferably, a plurality of cavities penetrating along the second direction (Y) are provided in the position-limiting member (50).

7. The battery (100) according to any one of claims 1 to 6, wherein a partition (70) is provided between two adjacent battery groups (20) along the first direction (X), and the partition (70) abuts against the first side wall (211) of each battery cell (21) in the two adjacent battery groups (20).

8. The battery (100) according to claim 7, wherein the partition (70) is adhered and fixed to the first side wall (211) of each battery cell (21) in the two adjacent battery groups (20).

9. The battery (100) according to claim 8, wherein the partition (70) is used to regulate the temperature of the battery cell (21), and a medium flow channel is provided in the partition (70).

10. The battery (100) according to claim 9, wherein the battery (100) further comprises a communication channel (71), an inlet pipe (72) and an outlet pipe (73), the medium flow channels of the partitions (70) are in communication through the communication channel (71), and the inlet pipe (72) and the outlet pipe (73) are in communication with the medium flow channel of the same partition (70).

11. The battery (100) according to claim 1, wherein the box (10) further comprises a connection seat (14) protruding from the accommodating frame (13) along the second direction (Y) to install the battery (100) on an electrical apparatus, or
wherein the battery cell (21) comprises an electrode terminal (201a), and along the height direction (Z), the surface of the battery cell (21) facing away from the electrode terminal (201a) is connected to the top cover (11) or the bottom cover (12).

12. An electrical apparatus comprising the battery (100) according to any one of claims 1 to 11, wherein the battery (100) is configured to provide electric energy.

13. A battery forming method operable to form a battery of any of claims 1 to 11, comprising:
providing (S100) an even number of battery cells (21), where the battery cell (21) includes a first side wall (211) and a second side wall, and the first side wall (211) is the wall with the largest area among all the outer walls of the battery cell (21);
forming (S200) two or more battery groups (20) by dividing a plurality of the battery cells (21) into groups, each group comprising an even number of battery cells (21), and arranging the second side walls of the battery cells (21) in the same group opposite to each other;
stacking (S300) the two or more battery groups (20) and placing them in a box (10) as a whole;
electrically connecting (S400) the battery cells (21) of the battery groups (20) via a busbar; and
providing (S500) two output members (40) and arranging them on the same side of a first direction (X), wherein the two output members (40) are electrically connected respectively to two output terminals provided on the outermost battery group (20) along the first direction (X), and the two output terminals are distributed along a second direction (Y) to form a power supply path together with the busbar.

## Patentansprüche

1. Batterie (100), umfassend:
einen Kasten (10), umfassend eine obere Abdeckung (11), eine untere Abdeckung (12) und einen Aufnahmerahmen (13), wobei die untere Abdeckung (12) und die obere Abdeckung (11) einander gegenüberliegend an zwei Enden des Aufnahmerahmens (13) in einer Höhenrichtung (Z) des Kastens (10) angeordnet sind,
Batteriegruppen (20), die in dem Kasten (10) angeordnet sind, wobei die Anzahl der Batteriegruppen (20) zwei oder mehr beträgt und diese entlang einer ersten Richtung (X) angeordnet sind, wobei jede der Batteriegruppen (20) eine Anzahl von Batteriezellen (21) umfasst, die in einer zweiten Richtung (Y) senkrecht zur ersten Richtung (X) angeordnet sind, wobei die Batteriezelle (21) eine erste Seitenwand (211) und eine zweite Seitenwand (212) umfasst, die miteinander verbunden sind, wobei die erste Seitenwand (211) die Wand mit der größten Fläche unter allen Außenwänden der Batteriezelle (21) ist, wobei die erste Richtung (X) senkrecht zur ersten Seitenwand (211) verläuft, und die zweiten Seitenwände zweier angrenzender Batteriezellen (21) entlang der zweiten Richtung (Y) einander gegenüberliegend angeordnet sind;
eine Sammelschiene, die verwendet wird, um zwei angrenzende Batteriezellen (21) elektrisch zu verbinden; und
zwei Ausgangselemente (40), die auf derselben Seite der ersten Richtung (X) angeordnet sind;
wobei die entlang der ersten Richtung (X) äußerste Batteriegruppe (20) mit zwei entlang der zweiten Richtung (Y) verteilten Ausgangsanschlüssen bereitgestellt ist und die zwei Ausgangselemente (40) jeweils elektrisch mit den zwei Ausgangsanschlüssen verbunden sind, um zusammen mit der Sammelschiene einen Stromversorgungspfad zu bilden, ferner umfassend
ein Positionsbegrenzungselement (50), das fest im Inneren des Kastens (10) verbunden ist und an der ersten Seitenwand (211) der Batteriezelle (21) anliegt, um die Verformung der Batteriezelle (21) in der ersten Richtung (X) zu begrenzen,
wobei das Positionsbegrenzungselement (50) mit dem Aufnahmerahmen (13) verbunden ist,
**dadurch gekennzeichnet, dass**
jede der Batteriegruppen (20) eine gerade Anzahl von Batteriezellen (21) umfasst, die in der zweiten Richtung (Y) angeordnet sind,
das Positionsbegrenzungselement (50) mit mindestens einem der oberen Abdeckung (11) und der unteren Abdeckung (12) verbunden ist, und
die Batterie (100) ferner eine Ausgangselementbasis (60) umfasst, die an dem Positionsbegrenzungselement (50) bereitgestellt ist, um das Ausgangselement (40) zu stützen.

2. Batterie (100) nach Anspruch 1, wobei die Sammelschiene eine Vielzahl von ersten Sammelschienen (31) und eine Vielzahl von zweiten Sammelschienen (32) umfasst, wobei die ersten Sammelschienen (31) verwendet werden, um zwei angrenzende Batteriezellen (21) entlang der ersten Richtung (X) elektrisch zu verbinden, und die zweiten Sammelschienen (32) verwendet werden, um zwei angrenzende Batteriezellen (21) entlang der zweiten Richtung (Y) elektrisch zu verbinden.

3. Batterie (100) nach Anspruch 2, wobei die zweite Sammelschiene (32) verwendet wird, zwei angrenzende Batteriezellen (21) in der äußersten Batteriegruppe (20) entlang der ersten Richtung (X) elektrisch zu verbinden.

4. Batterie (100) nach einem der Ansprüche 1 bis 3, wobei die zwei Ausgangsanschlüsse jeweils an den zwei Batteriezellen (21) bereitgestellt sind, die sich in der äußersten Batteriegruppe (20) an den Enden in der zweiten Richtung (Y) befinden.

5. Batterie (100) nach Anspruch 1, wobei:
sich das Positionsbegrenzungselement (50) entlang der zweiten Richtung (Y) erstreckt und an beiden Enden in der zweiten Richtung (Y) mit dem Kasten (10) verbunden ist.

6. Batterie (100) nach Anspruch 1 oder 5, wobei das Positionsbegrenzungselement (50) an der ersten Seitenwand (211) der Batteriezelle (21) in der äußersten Batteriegruppe (20) anliegt,
wobei vorzugsweise eine Vielzahl entlang der zweiten Richtung (Y) verlaufender Hohlräume in dem Positionsbegrenzungselement (50) bereitgestellt ist.

7. Batterie (100) nach einem der Ansprüche 1 bis 6, wobei zwischen zwei angrenzenden Batteriegruppen (20) entlang der ersten Richtung (X) eine Trennwand (70) bereitgestellt ist und die Trennwand (70) an der ersten Seitenwand (211) jeder Batteriezelle (21) in den zwei angrenzenden Batteriegruppen (20) anliegt.

8. Batterie (100) nach Anspruch 7, wobei die Trennwand (70) an der ersten Seitenwand (211) jeder Batteriezelle (21) in den zwei angrenzenden Batteriegruppen (20) angeklebt und fixiert ist.

9. Batterie (100) nach Anspruch 8, wobei die Trennwand (70) verwendet wird, um die Temperatur der Batteriezelle (21) zu regulieren, und in der Trennwand (70) ein Mediumströmungskanal bereitgestellt wird.

10. Batterie (100) nach Anspruch 9, wobei die Batterie (100) ferner einen Verbindungskanal (71), ein Einlassrohr (72) und ein Auslassrohr (73) umfasst, die Mediumströmungskanäle der Trennwände (70) über den Verbindungskanal (71) miteinander in Verbindung stehen, und das Einlassrohr (72) sowie das Auslassrohr (73) mit dem Mediumströmungskanal derselben Trennwand (70) in Verbindung stehen.

11. Batterie (100) nach Anspruch 1, wobei der Kasten (10) ferner einen Verbindungssitz (14) umfasst, der entlang der zweiten Richtung (Y) aus dem Aufnahmerahmen (13) herausragt, um die Batterie (100) an einer elektrischen Einrichtung zu installieren, oder
wobei die Batteriezelle (21) einen Elektrodenanschluss (201a) umfasst und entlang der Höhenrichtung (Z) die vom Elektrodenanschluss (201a) abgewandte Oberfläche der Batteriezelle (21) mit der oberen Abdeckung (11) oder der unteren Abdeckung (12) verbunden ist.

12. Elektrische Einrichtung, umfassend die Batterie (100) nach einem der Ansprüche 1 bis 11, wobei die Batterie (100) konfiguriert ist, um elektrische Energie bereitzustellen.

13. Batteriebildungsverfahren, das betriebsfähig ist, um eine Batterie nach einem der Ansprüche 1 bis 11 zu bilden, umfassend:
Bereitstellen (S100) einer geraden Anzahl von Batteriezellen (21), wobei die Batteriezelle (21) eine erste Seitenwand (211) und eine zweite Seitenwand einschließt und die erste Seitenwand (211) die Wand mit der größten Fläche unter allen Außenwänden der Batteriezelle (21) ist;
Bilden (S200) von zwei oder mehr Batteriegruppen (20) durch Aufteilen einer Vielzahl der Batteriezellen (21) in Gruppen, wobei jede Gruppe eine gerade Anzahl von Batteriezellen (21) umfasst, und Anordnen der zweiten Seitenwände der Batteriezellen (21) innerhalb derselben Gruppe einander gegenüberliegend;
Stapeln (S300) der zwei oder mehr Batteriegruppen (20) und Platzieren derselben als Ganzes in einen Kasten (10);
elektrisches Verbinden (S400) der Batteriezellen (21) der Batteriegruppen (20) über eine Sammelschiene; und
Bereitstellen (S500) von zwei Ausgangselementen (40) und Anordnen dieser auf derselben Seite einer ersten Richtung (X), wobei die beiden Ausgangselemente (40) jeweils elektrisch mit zwei Ausgangsanschlüssen verbunden sind, die an der äußersten Batteriegruppe (20) entlang der ersten Richtung (X) bereitgestellt sind, und die beiden Ausgangsanschlüsse entlang einer zweiten Richtung (Y) verteilt sind, um zusammen mit der Sammelschiene einen Stromversorgungspfad zu bilden.

## Revendications

1. Batterie (100), comprenant :
une boîte (10) comprenant un couvercle supérieur (11), un couvercle inférieur (12) et une structure de réception (13), le couvercle inférieur (12) et le couvercle supérieur (11) sont agencés en regard l'un par rapport à l'autre aux deux extrémités de la structure de réception (13) dans une direction de hauteur (Z) de la boîte (10) ;
des groupes de batteries (20) agencés dans la boîte (10), le nombre de groupes de batteries (20) étant de deux ou plus et ils sont agencés le long d'une première direction (X), chacun des groupes de batteries (20) comprend plusieurs cellules de batterie (21) agencées dans une deuxième direction (Y) perpendiculaire à la première direction (X), la cellule de batterie (21) comprend une première paroi latérale (211) et une deuxième paroi latérale (212) raccordées l'une à l'autre, la première paroi latérale (211) est la paroi qui a la plus grande aire parmi toutes les parois externes de la cellule de batterie (21), la première direction (X) est perpendiculaire à la première paroi latérale (211), et les deuxièmes parois latérales de deux cellules de batterie adjacentes (21) sont agencées en regard l'une par rapport à l'autre le long de la deuxième direction (Y) ;
une barre omnibus utilisée pour raccorder électriquement deux cellules de batterie adjacentes (21) ; et
deux éléments de sortie (40) agencés sur le même côté de la première direction (X) ;
le groupe de batteries (20) situé le plus à l'extérieur le long de la première direction (X) étant pourvu de deux bornes de sortie réparties le long de la deuxième direction (Y), et les deux éléments de sortie (40) étant électriquement raccordés respectivement aux deux bornes de sortie pour former un chemin d'alimentation avec la barre omnibus, comprenant en outre
un élément de limitation de position (50) raccordé de manière fixe à l'intérieur de la boîte (10) et venant en butée contre la première paroi latérale (211) de la cellule de batterie (21) pour limiter la déformation de la cellule de batterie (21) dans la première direction (X),
l'élément de limitation de position (50) étant raccordé à la structure de réception (13), **caractérisée en ce que**
chacun des groupes de batteries (20) comprend un nombre pair de cellules de batterie (21) agencées dans la deuxième direction (Y),
l'élément de limitation de position (50) est raccordé à au moins l'un du couvercle supérieur (11) et du couvercle inférieur (12), et
la batterie (100) comprend en outre une base d'élément de sortie (60) disposée sur l'élément de limitation de position (50) pour supporter l'élément de sortie (40).

2. Batterie (100) selon la revendication 1, dans laquelle la barre omnibus comprend une pluralité de premières barres omnibus (31) et une pluralité de deuxièmes barres omnibus (32), les premières barres omnibus (31) sont utilisées pour raccorder électriquement deux cellules de batterie (21) adjacentes le long de la première direction (X), et les deuxièmes barres omnibus (32) sont utilisées pour raccorder électriquement deux cellules de batterie (21) adjacentes le long de la deuxième direction (Y).

3. Batterie (100) selon la revendication 2, dans laquelle la deuxième barre omnibus (32) est utilisée pour raccorder électriquement deux cellules de batterie (21) adjacentes du groupe de batteries (20) situé le plus à l'extérieur le long de la première direction (X).

4. Batterie (100) selon l'une quelconque des revendications 1 à 3, dans laquelle les deux bornes de sortie sont respectivement fournies sur les deux cellules de batterie (21) situées aux extrémités dans la deuxième direction (Y) du groupe de batteries (20) situé le plus à l'extérieur.

5. Batterie (100) selon la revendication 1, dans laquelle :
l'élément de limitation de position (50) s'étend le long de la deuxième direction (Y) et est raccordé à la boîte (10) au niveau des deux extrémités dans la deuxième direction (Y).

6. Batterie (100) selon la revendication 1 ou 5, dans laquelle l'élément de limitation de position (50) vient en butée contre la première paroi latérale (211) de la cellule de batterie (21) du groupe de batteries (20) situé le plus à l'extérieur,
dans laquelle de préférence, une pluralité de cavités pénétrant le long de la deuxième direction (Y) sont fournies dans l'élément de limitation de position (50).

7. Batterie (100) selon l'une quelconque des revendications 1 à 6, dans laquelle une cloison (70) est fournie entre deux groupes de batteries (20) adjacents le long de la première direction (X), et la cloison (70) vient en butée contre la première paroi latérale (211) de chaque cellule de batterie (21) des deux groupes de batteries (20) adjacents.

8. Batterie (100) selon la revendication 7, dans laquelle la cloison (70) est collée et fixée à la première paroi latérale (211) de chaque cellule de batterie (21) des deux groupes de batteries (20) adjacents.

9. Batterie (100) selon la revendication 8, dans laquelle la cloison (70) est utilisée pour réguler la température de la cellule de batterie (21), et un canal de circulation de fluide est ménagé dans la cloison (70).

10. Batterie (100) selon la revendication 9, la batterie (100) comprenant en outre un canal de communication (71), un tuyau d'entrée (72) et un tuyau de sortie (73), les canaux de circulation de fluide des cloisons (70) étant en communication par l'intermédiaire du canal de communication (71), et le tuyau d'entrée (72) et le tuyau de sortie (73) sont en communication avec le canal de circulation de fluide de la même cloison (70).

11. Batterie (100) selon la revendication 1, dans laquelle la boîte (10) comprend en outre un siège de raccordement (14) dépassant de la structure de réception (13) le long de la deuxième direction (Y) pour installer la batterie (100) sur un appareil électrique, ou
dans laquelle la cellule de batterie (21) comprend une borne d'électrode (201a), et le long de la direction de hauteur (Z), la surface de la cellule de batterie (21) qui est orientée à l'opposé de la borne d'électrode (201a) est raccordée au couvercle supérieur (11) ou au couvercle inférieur (12).

12. Appareil électrique comprenant la batterie (100) selon l'une quelconque des revendications 1 à 11, dans lequel la batterie (100) est conçue pour fournir de l'énergie électrique.

13. Procédé de formation de batterie pouvant être utilisé pour former une batterie selon l'une quelconque des revendications 1 à 11, comprenant les étapes consistant à :
fournir (S100) un nombre pair de cellules de batterie (21), la cellule de batterie (21) incluant une première paroi latérale (211) et une deuxième paroi latérale, et la première paroi latérale (211) est la paroi qui a la plus grande aire parmi toutes les parois externes de la cellule de batterie (21) ;
former (S200) deux groupes de batteries (20) ou plus en divisant une pluralité des cellules de batterie (21) en groupes, chaque groupe comprenant un nombre pair de cellules de batterie (21), et en agençant les deuxièmes parois latérales des cellules de batterie (21) du même groupe en regard les unes par rapport aux autres ;
empiler (S300) les deux groupes de batteries (20) ou plus et les placer dans une boîte (10) sous la forme d'un ensemble ;
raccorder électriquement (S400) les cellules de batterie (21) des groupes de batteries (20) par l'intermédiaire d'une barre omnibus ; et
fournir (S500) deux éléments de sortie (40) et les agencer sur le même côté d'une première direction (X), les deux éléments de sortie (40) étant électriquement raccordés respectivement à deux bornes de sortie fournies sur le groupe de batteries (20) situé le plus à l'extérieur le long de la première direction (X), et les deux bornes de sortie étant réparties le long d'une deuxième direction (Y) pour former un chemin d'alimentation électrique avec la barre omnibus.
